# EUROPEAN PATENT APPLICATION

(11) **EP 3 828 226 A1**
(43) Date of publication of application: **02.06.2021**
(21) Application number: 19211498.1
(22) Date of filing: 26.11.2019
(51) Int. Cl.: C08J 5/04, C08J 5/12, C08K 7/02, C08L 95/00, C09J 195/00, B32B 11/00, B60R 13/08

(54) **AN ACOUSTIC DAMPING MATERIAL COMPRISING RENEWABLE RAW MATERIALS**

(71) Applicant: SIKA TECHNOLOGY AG, 6340 Baar (CH)
(72) Inventor: Kornacki, Zdislaw, 61130 Nidderau (DE); Schwab, Frederick, 60594 Frankfurt (DE); Hardt, Christian, 65451 Kelsterbach (DE); Fuhrmann, Bernd, 86381 Krumbach (DE)
(74) Representative: Sika Patent Attorneys

(57) **Abstract**

The invention is directed to an acoustic damping material comprising a binder matrix comprising a bitumen component or a polymer component, and filler component comprising at least one solid particulate cellulose-containing filler. The acoustic damping material is suitable for use in damping of undesired vibrations and noise in mechanical structures and components of manufactured articles. The invention is also directed to use of the acoustic damping material for damping of vibrations and noise in transportation vehicles and white goods, to a vibration and noise damping element comprising a damping layer composed of the acoustic damping material, to a method for applying a vibration and noise damping element to a noise emitting surface of a substrate, and to a vibration damped system comprising a substrate and the vibration and noise damping element bonded to a noise emitting surface of the substrate.

## Description

### Technical field

The present invention relates to compositions used for damping of vibrations and noise in mechanical structures of manufactured articles. In particular, the present invention relates to compositions comprising renewable raw materials, which are suitable for use in damping of vibrations of components and structures contained in articles of automotive industry, home appliances, and general industry.

### Background of the invention

Acoustic damping materials are widely used in automotive, home appliance and general industries for reducing of undesired vibrations, structure borne noise, and air borne noise. For example, in automotive vehicles, it is desirable to prevent transfer of vibrations generated by the motors, pumps, gears and other dynamic force generators through the body of the vehicle into the passenger compartment. Structure borne noise is produced when the vibrations generated by a dynamic force generator are transmitted through a supporting structure, typically a frame or other hollow structure, to a noise emitting surface, such as a metallic or plastic panel, which transforms the mechanical vibrations into sound waves. Structure borne noise and vibrations in general can be effectively reduced by application of vibration damping materials directly to the structures and surfaces of components subjected to vibrational disturbances, such as surfaces of vehicle panels, floors, and shells of machines, washers, and dryers.

Acoustic damping materials used for damping of vibrations of panels and plates are commonly provided in form of pre-formed single- and multi-layer damping elements or as liquid compositions, which are applied directly on surface of a substrate. Damping materials designed for damping of vibrations and noise in hollow structures such as cavities are usually provided in form of cavity filler inserts comprising an expandable composition and one or more attaching members, which are capable of holding the cavity filler insert in a desired position within the hollow structure.

Pre-formed single- and multiple-layer damping elements comprise a damping layer, which is in direct contact with a surface of the substrate to be damped against vibrational disturbances. The damping layer is capable of dissipating kinetic energy of the vibrating surface into heat energy through extension and compression of the material of the damping layer. Pre-formed single- and multiple-layer damping elements often comprise a layer of an adhesive composition, such as a pressure sensitive adhesive (PSA) or a hot-melt adhesive, to enable bonding of the damping layer to a surface of a substrate, such as a panel or floor of an automotive vehicle. Liquid applied damping systems are typically thermally drying, gelling, or reactive compositions, which are applied on the surface of the substrate in liquid state, for example by spraying.

Acoustic damping materials used for damping of vibrations of panels and plates can also be provided in form of constrained layer damping elements, which contain damping layer and a stiff outer layer that "constraints" the damping layer thereby sandwiching it between the stiff outer layer and the surface of the substrate to be damped. The stiffness of the outer layer is generally a factor of ten times higher than the stiffness of the layer of damping material. Commonly used materials for the outer top layer include, for example, aluminum and fiber glass fabrics. Constrained layer dampers are typically more effective in damping of undesired vibrations than single-layer damping elements but they are also more expensive to produce.

Cavity filler inserts are used for dampening of air borne noise within the cavity of a hollow structure component and to prevent vibrations from being transmitted through the walls of the cavity. A cavity filler insert typically consists of a damping material and at least one attachment member capable of holding the cavity filler insert in a desired position within the hollow structure. The damping material of the cavity filler insert is typically formulated as an expandable composition, which upon activation, such as at elevated temperature, expands and forms a seal around the interior surface of the wall of the cavity. Expandable damping materials suitable for damping of air borne noise within a cavity are commonly referred to as "acoustic baffles".

Commonly used materials for damping layers include highly filled compositions comprising bitumen, elastomers, or thermoplastic polymers and varying amount of additives, such as plasticizers, processing aids, rheology modifiers, and drying agents. Fillers are added to these compositions to meet different design goals. Some of the fillers are used to improve the acoustic damping properties, whereas other fillers are used to reduce the density of the material or to replace more expensive materials in order to reduce costs of raw materials. Typical fillers used in acoustic damping materials include, in particular, mineral fillers. Light weight mineral fillers, such as hollow ceramic spheres and hollow glass spheres have been widely used to reduce the density of the acoustic damping material and eventually to reduce the weight of the acoustic damping element. State-of-the-Art acoustic damping materials have a general disadvantage that they are composed entirely of non-renewable raw-materials. The mineral fillers in general and especially the light weight mineral fillers, which can comprise more than 35 wt.-% of the total weight of the acoustic damping material, are obtained by using energy intensive production processes causing significant amounts of carbon dioxide emissions.

There is thus a need for a novel type of acoustic damping material, wherein at least a portion of the raw materials is replaced with renewable raw materials. Furthermore, the new type of acoustic damping material should exhibit similar or improved damping properties compared to the State-of-the-Art damping materials.

### Summary of the invention

The object of the present invention is to provide an improved composition for use in damping of undesired vibrations and noise in mechanical structures and components of manufactured articles.

The subject of the present invention is an acoustic damping material as defined in claim 1.

It was surprisingly found out that cellulose-containing particles, such as wood particles, can be used as fillers in bitumen-, elastomer-, and thermoplastic polymer-based acoustic damping materials to replace the use of mineral fillers, in particular the use of light weight mineral fillers, such as hollow ceramic spheres. Furthermore, it was surprisingly found out that an acoustic damping material, wherein at least part of the mineral fillers have been replaced with wood particles, also exhibits improved vibration and noise damping properties compared to State-of-the-Art acoustic damping materials containing solely mineral and/or synthetic organic fillers.

One of the advantages of the acoustic damping material of the present invention is that it exhibits a high vibration damping performance defined by the loss factor over a wide range of temperatures, such as between -30 °C and 60 °C, which makes it especially suitable for use in damping of vibrations and noise of structures and components of automotive vehicles.

It has furthermore been found out that the acoustic damping material of the present invention provides a higher maximum value for the loss factor and broader temperature range for loss factors over 0.1 compared to State-of-the-Art acoustic damping materials containing solely mineral and/or synthetic organic fillers.

Still another advantage of the acoustic damping material of the present invention is that by replacing at least part of the mineral fillers with renewable raw materials not only the acoustic damping properties are improved but also the sustainability of the acoustic damping material is improved since the amount of energy consumption and carbon dioxide emissions resulting from production of the raw materials is significantly reduced.

Other subjects of the present invention are presented in other independent claims. Preferred aspects of the invention are presented in the dependent claims.

### Brief description of the Drawings

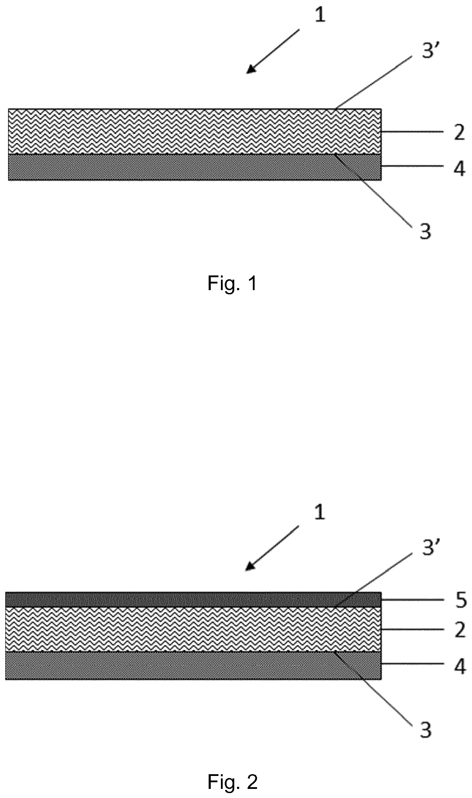

Fig. 1 shows a cross-section of a vibration and noise damping element (1) comprising a damping layer (2) having a first surface (3) and a second surface (3'), and an adhesive layer (4) covering the first surface (3) of the damping layer (2).
Fig. 2 shows a cross-section of a vibration and noise damping element (1) comprising a damping layer (2) having a first (3) surface and a second surface (3'), an adhesive layer (4) covering the first surface (3) of the damping layer (2), and a constraining layer (5) covering the second surface (3') of the damping layer (2).

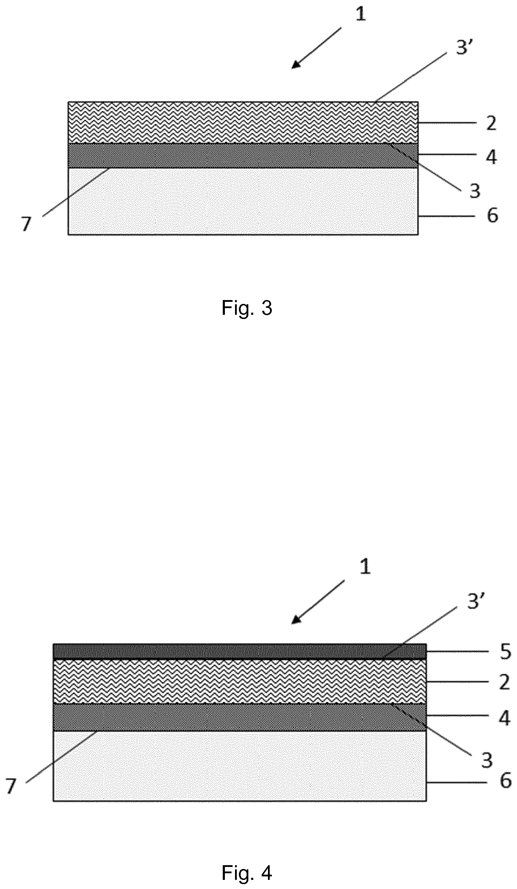

Fig. 3 shows a cross-section of a vibration damped system comprising a substrate (6) having a noise emitting surface (7) and a vibration and noise damping element (1) comprising a damping layer (2) and an adhesive layer (4), wherein the first surface (3) of the damping layer (2) is adhesively bonded to the noise emitting surface (7) via the adhesive layer (4).
Fig. 4 shows a cross-section of a vibration damped system comprising a substrate (6) having a noise emitting surface (7) and a vibration and noise damping element (1) comprising a damping layer (2), an adhesive layer (4), and a constraining layer (5), wherein the first surface (3) of the damping layer (2) is adhesively bonded to the noise emitting surface (7) via the adhesive layer (4) and wherein the damping layer (2) is sandwiched between the adhesive layer (4) and the constraining layer (5).

### Detailed description of the invention

The subject of the present invention is an acoustic damping material comprising:
a) A binder matrix comprising,
   a1) A bitumen component **B** or
   a2) A polymer component **P,**
   a3) Optionally at least one hydrocarbon resin **HR,**
   a4) Optionally at least one wax **W,**
   a5) Optionally at least one plasticizer **PL,** and
b) A filler component comprising:
   b1) At least one solid particulate cellulose-containing filler **FW** and
   b2) Optionally at least one solid particulate mineral filler **FM,**
wherein the at least one solid particulate cellulose-containing filler **FW** has a median particle width (X_{c,min}) D₅₀ in the range of 25 - 1000 µm, preferably 50 - 750 µm.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "a-olefin" designates an alkene having the molecular formula CₓH2ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "thermoplastic" refers to any material which can be melted and resolidified with little or no change in physical properties.

The term "elastomer" designates any natural, synthetic, or modified high molecular weight polymer or combination of polymers, which is capable of recovering from large deformations, i.e. has elastic properties. Typical rubbers are capable of being elongated or deformed to at least 200% of their original dimension under an externally applied force, and will substantially resume the original dimensions, sustaining only small permanent set (typically no more than about 20%), after the external force is released. In particular, the term "elastomer" designates rubbers that have not been chemically crosslinked. The term "chemically crosslinked" is understood to mean that the polymer chains forming the elastomer are inter-connected by a plurality of covalent bonds, which are mechanically and thermally stable. The terms "rubber" and "elastomer" are used interchangeably in the present document.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and tetrahydrofurane as a solvent, at a temperature of 35°C.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "softening point" refers to a temperature at which compound softens in a rubber-like state, or a temperature at which the crystalline portion within the compound melts. The softening point can be determined by Ring and Ball measurement conducted according to DIN EN 1238 standard.

The term "melting temperature" refers to a temperature at which a material undergoes transition from the solid to the liquid state. The melting temperature (Tₘ) is preferably determined by differential scanning calorimetry (DSC) according to ISO 11357 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The "amount or content of at least one component X" in a composition, for example "the amount of the at least one thermoplastic polymer TP" refers to the sum of the individual amounts of all thermoplastic polymers TP contained in the composition. For example, in case the composition comprises 20 wt.-% of at least one thermoplastic polymer TP, the sum of the amounts of all thermoplastic polymers P contained in the composition equals 20 wt.-%.

The term "room temperature" designates a temperature of 23°C.

The acoustic damping material of the present invention is especially suitable for use in damping of undesired vibrations and noise in mechanical structures and components of a manufactured article, such as an automotive vehicle or a product of home appliance or general industry. In these applications, the acoustic damping material, typically provided in form of a shaped article, such as a layer or pad, is applied directly on a surface a mechanical structure or component, which is subjected to vibrational disturbances. The acoustic damping material can be brought to a form of a suitably shaped article by using conventional extrusion and/or calendaring or hot-pressing techniques. Due to the specific type and amount of the constituents contained in the binder matrix a) and the filler component b), the efficiency of the damping material in dissipating kinetic energy of the vibrating surface into heat energy through extension and compression of the damping material in various application temperatures is maximized.

The bitumen component **B,** the polymer component **P** and the various additives including the at least one hydrocarbon resin **HR,** the at least one wax **H,** and the at least one plasticizer **PL,** if present in the acoustic damping material, form a binder matrix a) for the filler component b). The proportion of the binder matrix of the acoustic damping material is not particularly restricted but its amount should be high enough to enable efficient binding of the constituents of the filler component and to prevent formation of interconnected solid networks of the solid particulate compounds.

Preferably, the filler component b) comprises at least 25 wt.-%, preferably at least 35 wt.-%, more preferably at least 45 wt.-% of the total weight of the acoustic damping material. According to one or more embodiments, the filler component b) comprises 25 - 75 wt.-%, preferably 35 - 70 wt.-%, more preferably 40 - 70 wt.-%, even more preferably 45 - 70 wt.-%, still more preferably 45 - 65 wt.-% of the total weight of the acoustic damping material.

According to one or more embodiments, the sum of the amounts of constituents a1) to a5), i.e. the sum of the amounts of the bitumen component **B,** the polymer component **P,** the at least one hydrocarbon resin **HR,** the at least one wax **W,** and the at least one plasticizer **PL,** if present in the acoustic damping material, comprises not more than 70 wt.-%, preferably not more than 65 wt.-%, more preferably not more than 60 wt.-% of the total weight of the acoustic damping material. According to one or more embodiments, the sum of the amounts of constituents a1) to a5) comprises 15 - 65 wt.-%, preferably 20 - 60 wt.-%, more preferably 20 - 55 wt.-%, even more preferably 25 - 50, most preferably 25 - 45 wt.-% of the total weight of the acoustic damping material.

According to one or more embodiments, the acoustic damping material comprises:
b1) 1 - 35 wt.-%, preferably 2.5 - 30 wt.-%, more preferably 5 - 30 wt.-%, even more preferably 5 - 25 wt.-%, still more preferably 5 - 20 wt.-%, most preferably 7.5 - 15 wt.-% of the at least one solid particulate cellulose-containing filler **FW,** based on the total weight of the acoustic damping material. The term "solid particulate filler" designates in the present document fillers that are present in the acoustic damping material in form of solid particles. Preferably, the at least one solid particulate cellulose-containing filler **FW** is composed of particles of cellulose-containing material.

The at least one solid particulate cellulose containing filler has a median particle width (X_{c,min}) D₅₀ in the range of 25 - 1000 µm, preferably 50 - 750 µm, more preferably 100 - 650 µm, even more preferably 100 - 500 µm. The term "median particle width Dso" refers in the present disclosure to a particle width below which 50 % of all particles by volume have a smaller width than the D₅₀ value. The term "particle width" refers in the present disclosure to the diameter of a particle, which is the shortest chord (X_{c,min}) of a measured set of maximum chords (X_{c}) of a particle's projection. The particle size distribution is preferably measured using dynamic image analysis method conducted according to ISO 13322-2:2006 standard. For determination of the particle size distribution, the particles are preferably dispersed in air, preferably using air pressure dispersion method. The measurements can be conducted using any type of dynamic image analysis apparatus, such as a Camsizer XT device (trademark of Retsch Technology GmbH).

According to one or more embodiments, the at least one solid particulate cellulose-containing filler **FW** has a D₉₀ particle width (X_{c,min}) in the range of 100 - 2000 µm, preferably 150 - 1500 µm, more preferably 150 - 1250 µm, even more preferably 200 - 1000 µm and/or a D₁₀ particle width (X_{c,min}) in the range of 5 - 500 µm, preferably 25 - 350 µm, more preferably 35 - 300 µm, even more preferably 50 - 250 µm. The term D₉₀ particle width refers in the present disclosure to a particle width below which 90 % of all particles by volume have a smaller width than the D₉₀ value. In analogy, the term "D₁₀ particle size" refers to a particle width below which 10 % of all particles by volume have a smaller width than the D₁₀ value.

According to one or more embodiments, the particles of the at least one solid particulate cellulose-containing filler **FW** have an aspect ratio of not more than 10, preferably not more than 7.5, more preferably not more than 5. According to one or more embodiments, the aspect ratio of the particles of the at least one solid particulate cellulose-containing filler **FW** is in the range of 1 - 10, preferably 1.25 - 7.5, more preferably 1.5 - 7.5, even more preferably 1.5 - 5, still more preferably 1.5 - 4.5.

The term "aspect ratio" of a particle refers in the present disclosure to the value obtained by dividing the length of the particle (L) by the thickness (T) of the particle. The "length of a particle" refers in the present disclosure to the maximum Feret diameter (X_{Fe,max}), i.e. the longest Feret diameter out of the measured set of Feret diameters. The term "Feret diameter" refers in the present disclosure to the distance between two tangents on opposite sides of the particle, parallel to some fixed direction and perpendicular to the measurement direction. The "thickness of a particle" refers in the present disclosure to the minimum Feret diameter (X_{Fe,min}), i.e. the shortest Feret diameter out of the measured set of Feret diameters. The aspect ratio is, therefore, calculated as the ratio of X_{Fe,max} and X_{Fe,min}.

The aspect ratio of a particle can be determined by measuring the length and thickness of the particle using any suitable measurement technique, preferably by using dynamic image analysis method conducted according to ISO 13322-2:2006 standard, and calculating the aspect ratio from the measured dimensions of the particle as described above. The dimensions of particles can be measured with a dry dispersion method, where the particles are dispersed in air, preferably by using air pressure dispersion method. The measurements can be conducted using any type of dynamic image analysis apparatus, such as a Camsizer XT device (trademark of Retsch Technology GmbH).

According to one or more embodiments, the at least one solid particulate cellulose-containing filler **FW** has a number average aspect ratio of not more than 10, preferably not more than 7.5, more preferably not more than 5. According to one or more further embodiments, the at least one solid particulate cellulose-containing filler **FW** has a number average aspect ratio in the range of 1 - 10, preferably 1.25 - 7.5, more preferably 1.5 - 7.5, even more preferably 1.5 - 5, still more preferably 1.5 - 4.5.

The term "number average aspect ratio" refers in the present disclosure to the arithmetic average of the individual aspect ratios of the particles within a sample or collection or a statistically significant and representative random sample drawn from such a sample or collection. The number average aspect ratio of a particulate material can be determined by measuring the dimensions of individual particles of the sample using any suitable measurement technique, preferably by using dynamic image analysis method conducted according to ISO 13322-2:2006 standard, and calculating the number average aspect ratio from the measured dimensions of the individual particles as described above.

According to one or more embodiments, the at least one solid particulate cellulose-containing filler **FW** has a median aspect ratio of not more than 10, preferably not more than 7.5, more preferably not more than 5. According to one or more further embodiments, the at least one solid particulate cellulose-containing filler **FW** has a median aspect ratio in the range of 1 - 10, preferably 1.25 - 7.5, more preferably 1.5 - 7.5, even more preferably 1.5 - 5, still more preferably 1.5 - 4.5.

The term "median aspect ratio" refers in the present disclosure to the ratio of the median length L₅₀ to the median thickness T₅₀ the particles. The term "median length L₅₀" refers to a value below which 50 % of all particles by volume have a maximum Feret's diameter smaller than the L₅₀ value whereas the term "median thickness T₅₀" refers to a value below which 50 % of all particles by volume have a minimun Feret's diameter smaller than the median thickness T₅₀ value.

According to one or more embodiments, the at least one solid particulate cellulose-containing filler **FW** has a true particle density in the range of 0.25 - 1.5 g/cm³, preferably 0.30 - 1.25 g/cm³, more preferably 0.35 - 1.0 g/cm³, even more preferably 0.40 - 1.0 g/cm³, still more preferably 0.45 - 0.85 g/cm³, most preferably 0.50 - 0.75 g/cm³. The term "true particle density" refers in the present disclosure to the real density of the particles that make up the particulate material. In contrast the term "bulk density" refers to the mass of the particulate material in a unit volume (including voids between particles).

According to one or more embodiments, the at least one solid particulate cellulose-containing filler **FW** has a true solid state density in the range of 1.00 - 2.00 g/cm³, preferably 1.25 - 1.85 g/cm³, more preferably 1.35 - 1.75 g/cm³, even more preferably 1.40 - 1.70 g/cm³, still more preferably 1.40 - 1.65 g/cm³.

The term "true solid state density" refers to the "skeleton density" of a material calculated as a ratio of the mass of a particle to the volume occupied by the mass, wherein the contribution of the pores or internal voids is subtracted from the volume when calculating the true solid state density. The true solid state density of a particle is preferably determined by helium gas pycnometer measurements.

According to one or more embodiments, the at least one solid particulate cellulose-containing filler **FW** contains at least 25 wt.-%, preferably at least 35 wt.-%, more preferably at least 40 wt.-% of cellulose.

According to one or more embodiments, the at least one solid particulate cellulose-containing filler **FW** is composed of wood particles. The term "wood particle" refers to particles composed of wood fibers. The length dimension of a wood particle is typically orientated parallel to the grain structure of the wood particle, i.e. parallel to the orientation of the long axis of the dominant fibers in the wood particle.

Suitable wood particles for use as the at least one solid particulate cellulose-containing filler **FW** include, for example, all types of soft wood and hard wood particles, in particular hard wood particles.

The term "softwood" refers to wood from conifers, i.e. wood from needle-bearing trees from the order Pinales. Softwood-producing trees include, for example, pine, spruce, cedar, fir, larch, douglas-fir, hemlock, cypress, redwood, and yew. Conversely, the term "hardwood" refers to wood from broad-leaved or angiosperm trees, such as eucalyptus, maple, birch, beech, aspen, and the like. Softwoods contain two types of cells, longitudinal wood fibers (or tracheids) and transverse ray cells whereas hardwood trees contain pores or vessels. In softwood, water transport within the tree is via the tracheids rather than the pores of hardwoods.

According to one or more embodiments, the at least one solid particulate cellulose-containing filler **FW** is composed of hardwood particles, preferably selected from the group consisting of wood particles of eucalyptus, maple, birch, beech, and aspen.

According to one or more embodiments, the at least one solid particulate cellulose-containing filler **FW** comprises:
b11) At least one first solid particulate cellulose-containing filler **FW1** and
b12) At least one second solid particulate cellulose-containing filler **FW2,**
wherein the median particle width (X_{c,min}) D₅₀ of the at least one first solid particulate cellulose-containing filler **FW1** is at least 5 %, preferably at least 15 %, more preferably at least 25 % smaller than the median particle width (X_{c,min}) D₅₀ of the at least one second solid particulate cellulose-containing **FW2.**

According to one or more embodiments, the median particle width (X_{c,min}) D₅₀ of the at least one first solid particulate cellulose-containing filler **FW1** is not more than 90 %, preferably not more than 80 %, more preferably not more than 70 % smaller than the median particle width (X_{c,min}) D₅₀ of the at least one second solid particulate cellulose-containing filler **FW2.**

According to one or more embodiments, the at least one first solid particulate cellulose-containing filler **FW1** has a median particle width (X_{c,min}) D₅₀ in the range of 50 - 500 µm, preferably 100 - 350 µm, more preferably 125 - 300 µm and/or the at least one second solid particulate cellulose-containing filler **FW2** has a median particle width (X_{c,min}) D₅₀ in the range of 150 - 1000 µm, preferably 200 - 750 µm, more preferably 250 - 500 µm.

According to one or more embodiments, the weight ratio of the amount of the at least one first solid particulate cellulose-containing filler **FW1** to the amount of the at least one second solid particulate cellulose-containing filler **FW2** in the acoustic damping material is in the range of 5:1 to 1:5, preferably 3:1 to 1:3, more preferably 2:1 to 1:2, even more preferably 1.5:1 to 1:1.5, still more preferably 1.25:1 to 1:1.25.

According to one or more embodiments, the at least one first solid particulate cellulose-containing filler **FW1** is composed of beech or birch wood particles or of a mixture of beech and birch wood particles and/or the second solid particulate cellulose-containing filler **FW2** is composed of beech or birch wood particles or of a mixture of beech and birch wood particles.

According to one or more embodiments, the acoustic damping material comprises:
b2) 5 - 75 wt.-%, preferably 15 -70 wt.-%, more preferably 25 - 65 wt.-%, even more preferably 35 - 65 wt.-%, still more preferably 40 - 65 wt.-% of the at least one solid particulate mineral filler **FM,** based on the total weight of the acoustic damping material.

The at least one solid particulate mineral filler **FM** is preferably present in the acoustic damping material in form of solid particles, preferably having a d₉₀ particle diameter of not more than 2.5 mm, more preferably not more than 1.5 mm. The term "particle diameter d₉₀" refers in the present disclosure to a particle diameter below which 90 % of all particles by volume have a smaller diameter than the d₉₀ value. The term "particle diameter" refers in the present disclosure to the area-equivalent spherical diameter of a particle (Xₐᵣₑₐ). The particle diameter distribution is preferably measured using dynamic image analysis method conducted according to ISO 13322-2:2006 standard. For determination of the particle diameter distribution, the particles are preferably dispersed in air, preferably using air pressure dispersion method. The measurements can be conducted using any type of dynamic image analysis apparatus, such as a Camsizer XT device (trademark of Retsch Technology GmbH).

It is also preferred that the at least one solid particulate mineral filler **FM** is an inert mineral filler and has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate. The term "inert mineral filler" refers in the present disclosure to mineral fillers, which unlike mineral binders, are not reactive, i.e. do not undergo a hydration reaction in the presence of water.

According to one or more embodiments, the at least one solid particulate mineral filler **FM** is selected from the group consisting of calcium carbonate, magnesium carbonate, talc, kaolin, diatomaceous earth, wollastonite, feldspar, montmorillonite, dolomite, silica, cristobalite, iron oxide, iron nickel oxide, strontium ferrite, barium-strontium ferrite, hollow ceramic spheres, hollow glass spheres, hollow organic spheres, glass spheres, mica, barium sulfate, and graphite.

According to one or more embodiments, the acoustic damping material is substantially free of hollow ceramic spheres, preferably substantially free of hollow ceramic spheres, hollow glass spheres, hollow organic spheres, and glass spheres. The term "substantially free of" is understood to mean that the amount of the above listed mineral fillers is not more than 0.5 wt.-%, preferably not more than 0.25 wt.-%, more preferably not more than 0.1 wt.-%, even more preferably not more than 0.05 wt.-%, still more preferably 0 wt.-%, based on the total weight of the acoustic damping material.

It may be preferable that the acoustic damping material comprises several different mineral fillers, such as at least two different mineral fillers. Some of the mineral fillers may, for example, be used for improving the acoustic damping properties of the acoustic damping material whereas other may be used to enable adhering of the acoustic damping material to a metal substrate by magnetic force.

According to one or more embodiments, the at least one solid particulate mineral filler **FM** comprises:
b21) At least one first solid particulate mineral filler **FM1** and
b22) At least one second solid particulate mineral filler **FM2** different from the at least one first solid particulate mineral filler **FM1.**

According to one or more embodiments, the at least one first solid particulate mineral filler **FM1** has a median particle diameter d₅₀ in the range of 1 - 75 µm, preferably 2.5 - 50 µm and/or a true particle density of at least 1.5 g/cm³, preferably at least 2.0 g/cm³ and/or a number average aspect ratio of not more than 2.5, preferably not more than 2.0 and/or the at least one second solid particulate mineral filler **FM2** has a median particle diameter d₅₀ of at least 50 µm, preferably at least 100 µm and/or a true particle density of at least 1.5 g/cm³, preferably at least 2.0 g/cm³ and/or a number average aspect ratio of at least 2.0, preferably at least 3.0. The term "median particle diameter d₅₀" refers in the present disclosure to a particle diameter below which 50 % of all particles by volume have a smaller diameter than the d₅₀ value.

According to one or more embodiments, the at least one first solid particulate mineral filler **FM1** is selected from the group consisting of calcium carbonate, magnesium carbonate, talc, kaolin, diatomaceous earth, wollastonite, feldspar, montmorillonite, dolomite, silica, cristobalite, iron oxide , iron nickel oxide, strontium ferrite, and synthetic organic fillers.

According to one or more embodiments, the at least one second solid particulate mineral filler **FM2** is selected from the group consisting of mica, montmorillonite, slate, barium sulfate, and graphite.

The term "hydrocarbon resin" designates in the present document synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Examples of suitable hydrocarbon resins to be used as the at least one hydrocarbon resin **HR** include C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

The type of the at least one hydrocarbon resin **HR** is not particularly restricted in the present invention. The selection of the at least one hydrocarbon resin **HR** depends, at least partially, on the type of the other components contained in the binder matrix of the acoustic damping material, in particular of the type of the polymer component **P.**

According to one or more embodiments, the at least one hydrocarbon resin **HR** has:
- a softening point determined by using the Ring and Ball method as defined in DIN EN 1238 standard of at least 70 °C, preferably at least 80 °C, more preferably in the range of 70 - 180 °C, preferably 80 - 170 °C, more preferably 100 - 160 °C and/or
- an average molecular weight (Mₙ) in the range of 250 - 7500 g/mol, preferably 300 - 5000 g/mol and/or
- a glass transition temperature (T_{g}) determined by dynamical mechanical analysis (DMA) as the peak of the measured loss modulus (G") curve using an applied frequency of 1 Hz and a strain level of 0.1 % of at or above 0 °C, preferably at or above 15 °C, more preferably at or above 35 °C, even more preferably at or above 55 °C, still more preferably at or above 65 °C, most preferably at or above 75 °C.

Suitable hydrocarbon resins are commercially available, for example, under the trade name of Wingtack® series, Wingtack® Plus, Wingtack® Extra, and Wingtack® STS (all from Cray Valley); under the trade name of Escorez® 1000 series, Escorez® 2000 series, and Escorez® 5000 series (all from Exxon Mobile Chemical); under the trade name of Novares® T series, Novares® TT series, Novares® TD series, Novares® TL series, Novares® TN series, Novares® TK series, and Novares® TV series (all from RÜTGERS Novares GmbH); and under the trade name of Kristalex®, Plastolyn®, Piccotex®, Piccolastic® and Endex® (all from Eastman Chemicals).

The term "wax" designates in the present document substances that have a waxy consistency and have a melting temperature or melting temperature range of above normal room temperature, in particular above 25 °C.

Suitable waxes to be used as the at least one wax include in particular synthetic waxes, for example, petroleum waxes, such as paraffin wax, petrolatum, and microcrystalline waxes, polyolefin waxes, polyethylene glycol waxes (Carbowax), amide waxes, and chemically modified waxes, such as hardened or hydrogenated waxes, for example, Montan ester waxes.

According to one more embodiments, the at least one wax is selected from the group consisting of polyolefin waxes, paraffin waxes, microcrystalline waxes, and amide waxes.

According to one or more embodiments, the at least one wax W has
- a softening point determined by using the Ring and Ball method as defined in DIN EN 1238 standard in the range of 75 - 180 °C, preferably 80 - 160 °C, more preferably 85 - 140 °C and/or
- a melt viscosity at a temperature of 170 °C determined according to DIN 53019 standard in the range of 10 - 10000 mPa·s, preferably 100 to 5000 mPa·s, more preferably 500 - 3500 mPa·s. The melt viscosity can be determined by busing a rotational viscometer at 5 revolutions per minute, for example by using a Brookfield DV-2 Thermosel viscometer with a spindle No. 27.

According to one or more embodiments, the at least one wax is a polyolefin wax. The term "polyolefin wax" designates in the present document low molecular weight polymers of linear or branched α-olefins having from 2 to 30 carbon atoms and a number average molecular weight (Mₙ) in the range of 5000 - 25000 g/mol. They include both homopolymers and copolymers of the above mentioned linear or branched α-olefins. Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

According to one or more embodiments, the at least one wax W is a paraffin wax, preferably a Fischer-Tropsch wax. The term "paraffin wax" designates in the present disclosure hard, crystalline wax composed mainly of saturated paraffin hydrocarbons. The paraffin waxes are typically obtained from petroleum distillates or derived from mineral oils of the mixed-base or paraffin-base type.

According to one or more embodiments, the at least one wax **W** is an amide wax. The term "amide wax" designates in the present document waxes containing an amide bond (-CONH-) in the molecule or an amide group (-CONH₂) at the end of the molecule. According to one or more embodiments, the at least one wax **W** is an amide wax selected from the group consisting of N,N'-ethylenebis(stearoamide), stearic acid amide, N,N'-methylenebis(stearoamide),and methylolstearoamide.

According to a first preferred embodiment, the binder matrix a) of the acoustic damping material comprises:
a1) 25 - 65 wt.-%, preferably 35 - 55 wt.-% of the bitumen component **B,**
a3) 0 - 10 wt.-%, preferably 0.25 - 5 wt.-% of the at least one hydrocarbon resin **HR,** and
a4) 0 - 10 wt.-%, preferably 0.25 - 7.5 wt.-% of the at least one wax **W,** all proportions being based on the total weight of the acoustic damping material.

Acoustic damping materials according to the first preferred embodiment can be characterized as "bitumen-based damping materials".

The term "bitumen" designates in the present disclosure blends of heavy hydrocarbons, having a solid consistency at room temperature. These are normally obtained as vacuum residue from refinery processes, which can be distillation (topping or vacuum) and/or conversion processes, such as thermal cracking and visbreaking, of suitable crude oils. Furthermore, the term "bitumen" also designates natural and synthetic bitumen as well as bituminous materials obtained from the extraction of tars and bituminous sands.

The bitumen component **B** can comprise one of more different types of bitumen materials, such as penetration grade (distillation) bitumen, air-rectified (semi-blown) bitumen, and hard grade bitumen.

The term "penetration grade bitumen" refers here to bitumen obtained from fractional distillation of crude oil. A heavy fraction composed of high molecular weight hydrocarbons, also known as long residue, which is obtained after removal of gasoline, kerosene, and gas oil fractions, is first distilled in a vacuum distillation column to produce more gas oil, distillates, and a short residue. The short residue is then used as a feed stock for producing different grades of bitumen classified by their penetration index, typically defined by a PEN value, which is the distance in tenth millimeters (dmm) that a needle penetrates the bitumen under a standard test method. Penetration grade bitumen are characterized by penetration and softening point. The term "air-rectified bitumen" or "air-refined bitumen" refers in the present disclosure to a bitumen that has been subjected to mild oxidation with the goal of producing a bitumen that meets paving-grade bitumen specifications. The term "hard grade bitumen" refers in the present disclosure to bitumen produced using extended vacuum distillation with some air rectification from propane-precipitated bitumen. Hard bitumen typically have low penetration values and high softening-points.

According to one or more embodiments, the bitumen component **B** comprises at least 75 wt.-%, preferably at least 85 wt.-%, more preferably at least 90 wt.-% of at least one penetration grade bitumen, preferably having a penetration value in the range of 15 - 50 dmm, more preferably 20 - 45 dmm and/or a softening point determined by Ring and Ball measurement conducted according to DIN EN 1238 standard in the range of 40 - 125 °C, preferably 50 -100 °C.

In case of a bitumen-based damping material, the acoustic damping material preferably further comprises at least one modifying polymer **MP** for the bitumen component **B.**

Suitable polymers for use as the at least one modifying polymer **MP** include, for example, atactic polypropylenes (APP), amorphous polyolefins (APO), styrene block copolymers, and elastomers. The term "amorphous polyolefin" refers polyolefins to having a low crystallinity degree determined by a differential scanning calorimetry (DSC) measurements, such as in the range of 0.001 - 10 wt.-%, preferably 0.001 - 5 wt.-%. The crystallinity degree of a polymer can be determined by using the differential scanning calorimetry measurements conducted according to ISO 11357 standard to determine the heat of fusion, from which the degree of crystallinity is calculated. In particular, the term "amorphous polyolefin" designates poly-α-olefins lacking a crystalline melting point (Tₘ) as determined by differential scanning calorimetric (DSC) or equivalent technique.

Suitable amorphous polyolefins for use as the at least one modifying polymer **MP** include, for example, atactic polypropylene, amorphous propene rich copolymers of propylene and ethylene, amorphous propene rich copolymers of propylene and butene, amorphous propene rich copolymers of propylene and hexene, and amorphous propene rich terpolymers of propylene, ethylene, and butene. The term "propene rich" is understood to mean copolymers and terpolymers having a content of propene derived units of at least 50 wt.-%, preferably at least 65 wt.-%, more preferably at least 70 wt.-%, based on total weight of the copolymer/terpolymer.

Suitable styrene block copolymers for use as the at least one modifying polymer **MP** include, in particular, block copolymers of the SXS type, in each of which S denotes a non-elastomer styrene (or polystyrene) block and X denotes an elastomeric α-olefin block, which may be polybutadiene, polyisoprene, polyisoprene-polybutadiene, completely or partially hydrogenated polyisoprene (poly ethylene-propylene), or completely or partially hydrogenated polybutadiene (poly ethylene-butylene). The elastomeric α-olefin block preferably has a glass transition temperature in the range from -55 °C to -35 °C. The elastomeric α-olefin block may also be a chemically modified α-olefin block. Particularly suitable chemically modified α-olefin blocks include, for example, maleic acid-grafted α-olefin blocks and particularly maleic acid-grafted ethylene-butylene blocks. Preferred styrene block copolymers for use as the at least one modifying polymer **MP** include SBS, SIS, SIBS, SEBS, and SEPS block copolymers, in particular SBS block copolymer, preferably having a linear, radial, diblock, triblock or star structure.

Suitable elastomers for use as the at least one modifying polymer **MP** include, for example, styrene-butadiene rubber (SBR), ethylene propylene diene monomer rubber (EPDM), polyisoprene, polybutadiene, natural rubber, polychloroprene rubber, ethylene-propylene rubber (EPR), nitrile rubbers, and acrylic rubbers.

According to one or more embodiments, the at least one modifying polymer **MP** is selected from the group consisting of atactic polypropylenes (APP), amorphous polyolefins (APO), styrene block copolymers, styrene-butadiene rubber (SBR), ethylene propylene diene monomer rubber (EPDM), polyisoprene, polybutadiene, natural rubber, polychloroprene rubber, ethylene-propylene rubber (EPR), nitrile rubbers, and acrylic rubbers.

According to one or more embodiments, the at least one modifying polymer **MP** comprises 0.5 - 10 wt.-%, preferably 1 - 7.5 wt.-% of the total weight of the acoustic damping material.

In case of a bitumen-based damping material, it may be preferable that the acoustic damping material is substantially free of cross-linking/curing agents, such as free-radical cross-linking agents, for example peroxides. The phrase "substantially free" is intended to mean that if an amount of a cross-linking agent is found in the acoustic damping material, the amount of said amount is so negligible that the effect of the cross-linking agent cannot be obtained. In other words, the amount of a cross-linking agent found in the acoustic damping material cannot initiate curing of the polymeric components, in particular curing of the at least one modifying polymer **MP** or can initiate only a substantially negligible amount of cross-linking. According to one or more embodiments, the acoustic damping material contains less than 0.15 wt.-%, preferably less than 0.1 wt.-%, more preferably less than 0.01 wt.-%, even more preferably 0 wt.-% of cross-linking/curing agents, based on the total weight of the acoustic damping material.

According to a second preferred embodiment, the binder matrix a) of the acoustic damping material comprises:
a2) 0.5 - 25 wt.-%, preferably 1.5 - 20 wt.-% of the polymer component **P** comprising at least one thermoplastic polymer **TP,**
a3) 2.5 - 35 wt.-%, preferably 5 - 30 wt.-% of the at least one hydrocarbon resin **HR,**
a4) 0 - 15 wt.-%, preferably 0.5 - 10 wt.-% of the at least one wax **W,** and
a5) 0 - 30 wt.-%, preferably 0.5 - 15 wt.-% of the at least one plasticizer **PL,** all proportions being based on the total weight of the acoustic damping material.

Acoustic damping materials according to the second preferred embodiment can be characterized as "bitumen-free thermoplastic damping materials".

In case of a bitumen-free thermoplastic damping material, the polymer component **P** comprises at least one thermoplastic polymer **TP** and the portion of the bitumen component **B** in the binder matrix a) has been replaced by a specific combination of the at least one thermoplastic polymer **TP** and the at least one hydrocarbon resin **HR** as well as the at least one wax **W** and the at least one plasticizer **PL,** which are optionally added to the binder matrix a). The use of such binder matrixes has been found out to enable providing bitumen-free thermoplastic damping materials, which can be processed into shaped articles using conventional thermoplastic processing methods, such as extrusion, calendering, injection molding, and hot-pressing techniques.

According to one or more embodiments, the bitumen-free thermoplastic damping material comprises less than 1 wt.-%, preferably less than 0.5 wt.-%, more preferably less than 0.1 wt.-%, even more preferably less than 0.01 wt.-% of bitumen, based on the total weight of the bitumen-free thermoplastic damping material.

The composition of the polymer component **P** of a bitumen-free thermoplastic damping material is preferably selected such that the temperature range at which the maximum vibration damping effect of the damping material coincides with the range of temperatures to which the surface of a substrate to be damped against vibrations is subjected during its use.

Since the ability of polymers to dissipate vibrations to heat energy is at maximum when the polymer is in a transition state between the hard/glassy and soft/rubbery state, preferred thermoplastic polymers to be used in the bitumen-free thermoplastic damping material have a glass transition temperature (T_{g}) falling within the intended range of application temperatures. For example, in case the bitumen-free thermoplastic damping material is used for damping of vibrations and noise in structures of automotive vehicles, the application temperatures typically range from -40 °C to 60 °C, in particular from -35 °C to 50 °C. On the other hand, preferred thermoplastic polymers **TP** to be used in the polymer component **P** have a softening point (Tₛ) and/or a melting temperature (Tₘ) above the maximum application temperature of the bitumen-free thermoplastic damping material.

According to one or more embodiments, the at least one thermoplastic polymer **TP** has:
- a glass transition temperature (T_{g}) determined by dynamical mechanical analysis (DMA) as the peak of the measured loss modulus (G") curve using an applied frequency of 1 Hz and a strain level of 0.1 % of below 25 °C, preferably below 5 °C, more preferably below 0 °C and/or
- a softening point (Tₛ) determined by Ring and Ball measurement conducted according to DIN EN 1238 standard of above 35 °C, preferably above 45 °C, more preferably above 55 °C, such as in the range of 35 - 250 °C, preferably 45 - 200 °C, more preferably 55 - 180 °C.

According to one or more embodiments, the polymer component **P** is composed of the at least one thermoplastic polymer **TP.**

The type of the at least one thermoplastic polymer **TP** is not particularly restricted. Various types of thermoplastic polymers, including crystalline, semicrystalline, and amorphous polymers and thermoplastic elastomers are suitable for use as the at least one thermoplastic polymer **TP.** According to one or more embodiments, the at least one thermoplastic polymer **TP** is selected from the group consisting of polyolefin homopolymers and copolymers, copolymers of ethylene with vinyl acetate, and thermoplastic olefin elastomers (TPE-O).

Suitable polyolefin homopolymers and copolymers include, for example, ethylene homopolymers, ethylene-α-olefin copolymers, propylene homopolymers, and propylene-α-olefin copolymers.

Suitable ethylene-α-olefin copolymers include, for example, ethylene-α-olefin random and block copolymers of ethylene and one or more C₃-C₂₀ α-olefin monomers, in particular one or more of propylene, 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of ethylene-derived units, based on the total weight of the copolymer.

Suitable propylene-α-olefin copolymers include propylene-ethylene random copolymers and propylene-α-olefin random and block copolymers of propylene and one or more C₄-C₂₀ α-olefin monomers, in particular one or more of 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of propylene-derived units, based on the total weight of the copolymer.

Suitable copolymers of ethylene and vinyl acetate include those having a content of a structural unit derived from vinyl acetate in the range of 4 - 90 wt.-%, in particular 4 - 80 wt.-%, based on the total weight of the copolymer. Suitable copolymers of ethylene and vinyl acetate are commercially available, for example, under the trade name of Escorene® (from Exxon Mobil), under the trade name of Primeva® (from Repsol Quimica S.A.), and under the trade name of Evatane® (from Arkema Functional Polyolefins).

Suitable ethylene-α-olefin copolymers include, for example, ethylene-based polyolefin elastomers (POE), which are commercially available, for example, under the trade name of Engage®, such as Engage® 7256, Engage® 7467, Engage® 7447, Engage® 8003, Engage® 8100, Engage® 8480, Engage® 8540, Engage® 8440, Engage® 8450, Engage® 8452, Engage® 8200, and Engage®14 (all from Dow Chemical Company).

Other suitable ethylene-α-olefin copolymers include, for example, ethylene-based plastomers, which are commercially available, for example, under the trade name of Affinity®, such as Affinity® EG 8100G, Affinity® EG 8200G, Affinity® SL 8110G, Affinity® KC 8852G, Affinity® VP 8770G, and Affinity® PF 1140G (all from Dow Chemical Company) and under the trade name of Exact®, such as Exact® 3024, Exact® 3027, Exact® 3128, Exact® 3131, Exact® 4049, Exact® 4053, Exact® 5371, and Exact® 8203 (all from Exxon Mobil).

Further suitable ethylene-α-olefin copolymers include ethylene-α-olefin block copolymers, such as ethylene-based olefin block copolymers (OBC), which are commercially available, for example, under the trade name of Infuse®, such as Infuse® 9100, Infuse® 9107, Infuse® 9500, Infuse® 9507, and Infuse® 9530 (all from Dow Chemical Company).

Suitable propylene-α-olefin copolymers include, for example, propylene based elastomers (PBE) and propylene-based plastomers (PBP), which are commercially available, for example, under the trade name of Versify® (from Dow Chemical Company) and under the trade name of Vistamaxx® (from Exxon Mobil).

Further suitable polyolefin homopolymers and copolymers include at 25 °C solid amorphous poly-α-olefins. These are commercially available, for example, under the trade name of Vestoplast® (from Evonik Industries), under the trade name of Eastoflex® (from Eastman Corporation), and under the trade name of REXtac® (from REXtac LLC).

Thermoplastic olefin elastomers (TPE-O), which are also known as thermoplastic polyolefins (TPO), are also suitable for use as the at least one thermoplastic polymer **TP.** TPOs are heterophase polyolefin compositions containing a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Commercially available TPOs include reactor blends of the base polyolefin and the polyolefin modifier, also known as "in-situ TPOs" or "impact copolymers (ICP)", as well as physical blends of the aforementioned components. In case of a reactor-blend type of TPO, the components are typically produced in a sequential polymerization process, wherein the components of the matrix phase are produced in a first reactor and transferred to a second reactor, where the components of the dispersed phase are produced and incorporated as domains in the matrix phase. A physical-blend type of TPO is produced by melt-mixing the base polyolefin with the polyolefin modifier each of which was separately formed prior to blending of the components.

Reactor-blend type TPOs comprising polypropylene as the base polymer are often referred to as "heterophasic propylene copolymers" whereas reactor-blend type TPOs comprising polypropylene random copolymer as the base polymer are often referred to as "heterophasic propylene random copolymers". Depending on the amount of the polyolefin modifier, the commercially available heterophasic propylene copolymers are typically characterized as "impact copolymers" (ICP) or as "reactor-TPOs" or as "soft-TPOs". The main difference between these types of TPOs is that the amount of the polyolefin modifier is typically lower in ICPs than in reactor-TPOs and soft-TPOs, such as not more than 40 wt.-%, in particular not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable TPOs are commercially available, for example, under the trade name Hifax®, Adflex® and Adsyl® (all from Lyondell Basell), such as Hifax® CA 10A, Hifax® CA 12A, and Hifax® CA 212 A and under the trade name of Borsoft® (from Borealis Polymers), such as Borsoft® SD233 CF.

In acoustic damping applications it is generally desirable to maximize the broadness of the range of temperatures at which the vibration and noise damping effect of the acoustic damping material is at maximum, in particular the range of temperatures at which the measured loss factor of the damping material has a value of above 0.1. Since the maximum vibration damping effect of thermoplastic polymers typically occurs at a narrow range of temperatures, i.e. when the polymer is in its transition state, it may be preferred that the bitumen-free thermoplastic damping material comprises at least two different thermoplastic polymers having different glass transition temperatures (T_{g}).

It can furthermore be advantageous that the at least two different thermoplastic polymers are not entirely miscible with each other and/or that the at least two different thermoplastic polymers can be mixed with each other to form a semi-compatible polymer blend containing micro-incompatible phases. By the polymers being "entirely miscible" with each other is meant that a polymer blend composed of the at least two thermoplastic polymers has a negative Gibbs free energy and heat of mixing. The polymer blends composed of entirely miscible polymers tend to have one single glass transition temperature (T_{g}) as measured by using dynamic mechanical analysis (DMA).

According to one or more embodiments, the at least one thermoplastic polymer **TP** comprises:
a21) At least one hard thermoplastic polymer **TP1,** preferably at least one hard ethylene vinyl acetate copolymer, having a melt flow index (MFI) determined according to ISO 1133 (190 °C/2.16 kg) of not more than 50 g/10 min, preferably not more than 35 g/10 min, more preferably not more than 25 g/10 min, even more preferably not more than 15 g/10 min, still more preferably not more than 10 g/10 min and/or having a glass transition temperature (T_{g}) determined by dynamical mechanical analysis (DMA) as the peak of the measured loss modulus (G") curve using an applied frequency of 1 Hz and a strain level of 0.1 % of below 5 °C, preferably below 0 °C, more preferably below -10 °C, even more preferably below -20 °C and/or
a22) At least one soft thermoplastic polymer **TP2,** preferably at least one soft ethylene vinyl acetate copolymer, having a melt flow index (MFI) determined according to ISO 1133 (190 °C/2.16 kg) of at least 75 g/10 min, preferably at least 100 g/10 min, more preferably at least 150 g/10 min, even more preferably at least 200 g/10 min, most preferably at least 250 g/10 min and/or having a glass transition temperature (T_{g}) determined by dynamical mechanical analysis (DMA) as the peak of the measured loss modulus (G") curve using an applied frequency of 1 Hz and a strain level of 0.1 % of below 5 °C, preferably below -0 °C, more preferably below -10 °C, even more preferably below -20 °C.

Generally, the expression "the at least one component X comprises at least one component XN", such as "the at least one thermoplastic polymer **TP** comprises at least one hard thermoplastic polymer **TP1"** is understood to mean in the context of the present disclosure that the bitumen-free thermoplastic damping material comprises one or more hard thermoplastic polymers **TP1** as representatives of the at least one thermoplastic polymer **TP.**

According to one or more embodiments, the at least one thermoplastic polymer **TP** further comprises:
a23) At least one polyolefin **TP3,** wherein the at least one polyolefin **TP3** is preferably not entirely miscible with the at least one hard thermoplastic polymer **TP1** and/or with the at least one soft thermoplastic polymer **TP2.**

According to one or more embodiments, the at least one thermoplastic polymer **TP** comprises the at least one hard thermoplastic polymer **TP1** and the least one polyolefin **TP3.**

According to one or more embodiments, the at least one thermoplastic polymer **TP** comprises the at least one soft thermoplastic polymer **TP2** and the least one polyolefin **TP3.**

According to one or more further embodiments, the at least one thermoplastic polymer **TP** comprises the at least one hard thermoplastic polymer **TP1,** the at least one soft thermoplastic polymer **TP2,** and the least one polyolefin **TP3.**

According to one or more embodiments, the at least one hard thermoplastic polymer **TP1** is an ethylene vinyl acetate copolymer having a content of a structural unit derived from vinyl acetate of not more than 20 wt.-%, preferably not more than 15 wt.-%, based on the total weight of the copolymer and/or the at least one soft thermoplastic polymer **TP2** is an ethylene vinyl acetate copolymer having a content of a structural unit derived from vinyl acetate of at least 15 wt.-%, preferably at least 20 wt.-%, based on the total weight of the copolymer.

According to one or more embodiments, the at least one hard thermoplastic polymer **TP1** comprises at least 5 wt.-%, preferably 10 - 35 wt.-% of the total weight of the at least one thermoplastic polymer **TP** and/or the at least one soft thermoplastic polymer **TP2** comprises at least 10 wt.-%, preferably 15 - 45 wt.-% of the total weight of the at least one thermoplastic polymer **TP** and/or the at least one polyolefin **TP3** comprises at least 25 wt.-%, preferably 30 - 75 wt.-% of the total weight of the at least one thermoplastic polymer **TP.**

The type of the at least one polyolefin **TP3** is not particularly restricted in the present invention. Preferably, the at least one polyolefin **TP3** is not entirely miscible with the at least one hard thermoplastic polymer **TP1** and/or the at least one soft thermoplastic polymer **TP2.** It may furthermore be preferred that the at least one polyolefin **TP3** can be mixed with the at least one hard thermoplastic polymer **TP1** and/or with the at least one soft thermoplastic polymer **TP2** to form a semi-compatible polymer blend containing micro-incompatible phases.

According to one or more embodiments, the at least one polyolefin **TP3** is selected from the group consisting of at 25 °C solid poly-α-olefins and propylene-based elastomers.

Suitable at 25 °C solid poly-α-olefins to be used as the at least one polyolefin **TP3** include, for example, homopolymers, copolymers, and terpolymers of monomers selected from the group consisting of ethylene, propylene, 1-butene and higher α-olefins. Especially suitable at 25 °C solid poly-α-olefins include homopolymers of propylene, copolymers of propylene and ethylene, copolymers of propylene and 1-butene or other higher α-olefins, homopolymers of ethylene, copolymers of ethylene and propylene, copolymers of ethylene and 1-butene or other higher α-olefins, and terpolymers of ethylene, propylene, and 1-butene.

According to one or more embodiments, the at least one polyolefin **TP3** comprises at least one propylene-based elastomer **TP31,** preferably having:
- a melting temperature (Tₘ) as determined by DSC according to ISO 11357 standard of not more than 110 °C, preferably not more than 105 °C, more preferably not more than 100 °C and/or
- an average molecular weight (Mₙ) in the range of 10'000 - 250'000 g/mol, preferably 25'000 - 200'000 g/mol and/or
- a melt flow index measured according to ASTM D1238 (230 °C/2.16 kg) of 2 - 30 g/10 min, preferably 2 - 20 g/10 min.

Suitable propylene-based elastomers include, in particular, copolymers of propylene and at least one comonomer selected from the group consisting of ethylene and C₄-C₁₀ α-olefins, wherein the copolymer comprises at least 65 wt.-%, preferably at least 70 wt.-% propylene-derived units, based on the total weight of the copolymer and 1 - 35 wt.-%, preferably 5 - 25 wt.-% units derived from at least one of ethylene or a C₄-C₁₀ α-olefin, based on the total weight of the copolymer.

According to one or more embodiments, the at least one propylene-based elastomer **TP31** is a copolymer of propylene and ethylene comprising 80 - 90 wt.-%, preferably 82 - 90 wt.-% of propylene-derived units, based on the total weight of the propylene-based elastomer and 9 - 18 wt.-%, preferably 12 - 16 wt.-% of ethylene-derived units based on the total weight of the propylene-based elastomer.

According to one or more embodiments, the at least one propylene-based elastomer **TP31** has:
- a Vicat softening point determined according to ASTM 1525 standard using a weight of 200 g of equal or less than 95 °C, preferably equal or less than 85 °C, more preferably equal or less than 75 °C and/or
- a heat of fusion as determined by DSC of not more than 50 J/g, preferably not more than 25 J/g, more preferably not more than 15 J/g, even more preferably not more than 10 J/g and/or
- a percent crystallinity as determined by DSC procedure of not more than 25 %, preferably not more than 10 %, more preferably not more than 2.5 % of that of isotactic polypropylene.

Regarding the determination of the percent crystallinity of the propylene-based elastomer, the heat of fusion of isotactic polypropylene (100 % crystallinity) is estimated at 189 J/g.

Suitable propylene-based elastomers are commercially available, for example, under the trade name of Vistamaxx® (from Exxon Mobil) and under the trade name of Versify® (from Dow Chemical Company).

According to one or more embodiments, the at least one polyolefin **TP3** comprises at least one at 25 °C solid amorphous poly-α-olefin **TP32,** preferably having:
- a softening point (Tₛ) determined by using the Ring and Ball method as defined in DIN EN 1238 standard in the range of 60 - 200 °C, preferably 75 - 180 °C, more preferably 85 - 180 °C and/or
- an average molecular weight (Mₙ) in the range of 2500 - 35000 g/mol, preferably 3000 - 30000 g/mol, more preferably 5000 - 25000 g/mol and/or
- a melt viscosity at 190 °C determined according to DIN 53019 standard of not more than 150000 MPa·s, preferably not more than 135000 MPa·s, more preferably not more than 125000 MPa·s. The melt viscosity can be determined by busing a rotational viscometer at 5 revolutions per minute, for example by using a Brookfield DV-2 Thermosel viscometer with a spindle No. 27.

The term "amorphous poly-α-olefin" designates in the present disclosure poly-α-olefins having a low crystallinity degree determined by a differential scanning calorimetry (DSC) measurements, such as in the range of 0.001 - 10 wt.-%, preferably 0.001 - 5 wt.-%. The crystallinity degree of a polymer can be determined by using DSC measurements to determine the heat of fusion of the polymer, from which the degree of crystallinity is calculated. In particular, the term "amorphous poly-α-olefin" designates poly-α-olefins lacking a crystalline melting temperature (Tₘ) as determined by DSC or equivalent technique.

According to one or more embodiments, the at least one at 25 °C solid amorphous poly-α-olefin **TP32** has a xylene cold soluble content (XCS) determined at 25 °C according ISO 16152-2005 standard of at least 80 wt.-%, preferably at least 90 wt.-%, more preferably at least 95 wt.-% and/or a heat of fusion (Hf) as determined by DSC measurements of not more than 35 J/g, preferably not more than 25 J/g, more preferably not more than 15 J/g.

Examples of suitable at 25 °C solid amorphous poly-α-olefins include amorphous atactic polypropylene, amorphous propene rich propylene-α-olefin copolymers and terpolymers, in particular amorphous propylene-ethylene copolymers, amorphous propylene-butene copolymers, amorphous propylene-hexene copolymers, and amorphous propylene-ethylene-butene terpolymers. Such amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

Suitable at 25 °C solid amorphous poly-α-olefins are commercially available, for example, under the trade name of Vestoplast® (from Evonik Industries), under the trade name of Eastoflex® (from Eastman Corporation), and under the trade name of REXtac® (from REXtac LLC).

According to one or more further embodiments, the at least one polyolefin **TP3** consists of the at least one propylene-based elastomer **TP31.** According to one or more embodiment, the at least one polyolefin **TP3** consists of the at least one at 25 °C solid amorphous poly-α-olefin **TP32.** According to one or more further embodiments, the at least one polyolefin **TP3** comprises the at least one propylene-based elastomer **TP31** and the at least one at 25 °C solid amorphous poly-α-olefin **TP32.**

According to one or more embodiments, the at least one thermoplastic polymer **TP** comprises 3 - 15 wt.-%, preferably 3.5 - 12.5 wt.-%, more preferably 5 - 12.5 wt.-% of the total weight of the acoustic damping material and/or wherein the at least one hydrocarbon resin **HR** comprises 5 - 30 wt.-%, preferably 10 - 25 wt.-%, more preferably 12.5 - 20 wt.-%, even more preferably 15 - 18.5 wt.-% of the total weight of the acoustic damping material, wherein the at least one hydrocarbon resin **HR** is preferably a hydrogenated hydrocarbon resin.

According to one or more embodiments, the at least one wax **W** comprises at least 0.5 wt.-%, preferably 1 - 15 wt.-%, more preferably 2.5 - 10 wt.-%, even more preferably 2.5 - 7.5 wt.-%, still more preferably 3.5 - 7.5 wt.-% of the total weight of the acoustic damping material and/or wherein the at least one plasticizer **PL** comprises at least 0.5 wt.-%, preferably 1 - 15 wt.-%, more preferably 2.5 - 10 wt.-%, even more preferably 2.5 - 7.5 wt.-%, still more preferably 3.5 - 7.5 wt.-% of the total weight of the acoustic damping material.

Preferred plasticizers **PL** are liquids, wherein the term "liquid" is defined as a material that flows at normal room temperature, has a pour point of less than 20 °C and/or a kinematic viscosity at 25 °C of 50'000 cSt or less. Preferably, the at least one plasticizer **PL** is selected from the group consisting of process oils and at 25 °C liquid hydrocarbon resins.

According to one or more embodiments, the at least one plasticizer **PL** comprises at least one process oil **PL1** selected from the group consisting of mineral oils, synthetic oils, and vegetable oils.

The term "mineral oil" refers in the present disclosure hydrocarbon liquids of lubricating viscosity (i.e., a kinematic viscosity at 100 °C of 1 cSt or more) derived from petroleum crude oil and subjected to one or more refining and/or hydroprocessing steps, such as fractionation, hydrocracking, dewaxing, isomerization, and hydrofinishing, to purify and chemically modify the components to achieve a final set of properties. In other words, the term "mineral" refers in the present disclosure to refined mineral oils, which can be also characterized as Group I-III base oils according the classification of the American Petroleum Institute (API).

Suitable mineral oils to be used as the at least one process oil **PL1** include paraffinic, naphthenic, and aromatic mineral oils. Particularly suitable mineral oils include paraffinic and naphtenic oils containing relatively low amounts of aromatic moieties, such as not more than 25 wt.-%, preferably not more than 15 wt.-%, based on the total weight of the mineral oil.

The term "synthetic oil" refers in the present disclosure to full synthetic (polyalphaolefin) oils, which are also known as Group IV base oils according to the classification of the American Petroleum Institute (API). Suitable synthetic oils are produced from liquid polyalphaolefins (PAOs) obtained by polymerizing α-olefins in the presence of a polymerization catalyst, such as a Friedel-Crafts catalyst. In general, liquid PAOs are high purity hydrocarbons with a paraffinic structure and high degree of side-chain branching. Particularly suitable synthetic oils include those obtained from so-called Gas-To-Liquids processes.

According to one or more embodiments, the at least one plasticizer **PL** comprises at least one at 25 °C liquid hydrocarbon resin **PL2.**

Suitable at 25 °C liquid hydrocarbon resins include at 25 °C liquid polybutenes and at 25 °C liquid polyisobutylenes (PIB). The term "at 25 °C liquid polybutene" designates in the present disclosure low molecular weight olefin oligomers comprising isobutylene and/or 1-butene and/or 2-butene.The ratio of the C₄-olefin isomers can vary by manufacturer and by grade. When the C4-olefin is exclusively 1-butene, the material is referred to as "poly-n-butene" or "PNB". The term "at 25 °C liquid polyisobutylene" designates in the present disclosure low molecular weight polyolefins and olefin oligomers of isobutylene, preferably containing at least 75 %, more preferably at least 85 % of repeat units derived from isobutylene. Particularly suitable at 25 °C liquid polybutenes and polyisobutylenes to be used as the at least one at 25 °C liquid hydrocarbon resin **PL2** have a molecular weight (Mₙ) of not more than 10000 g/mol, preferably not more than 5000 g/mol, more preferably not more than 3500 g/mol, even more preferably not more than 3000 g/mol, still more preferably not more than 2500 g/mol.

Liquid polybutenes are commercially available, for example, under the trade name of Indopol® H- and L-series (from Ineos Oligomers), under the trade name of Infineum® C-series and Parapol® series (from Infineum), and under the trade name of PB-series (Daelim). Liquid polyisobutylenes (PIBs) are commercially available, for example, under the trade name of Glissopal® V-series (from BASF) and and under the trade name of Dynapak®-series (from Univar GmbH, Germany).

According to one or more embodiments, the at least one plasticizer **PL** consists of the at least one process oil **PL1,** preferably selected from the group consisting of mineral oils, synthetic oils, and vegetable oils.

According to one or more further embodiments, the at least one plasticizer **PL** consists of the at least one at 25 °C liquid hydrocarbon resin **PL2,** preferably selected from the group consisting of liquid polybutenes and liquid polyisobutylenes (PIB), preferably having a molecular weight (Mₙ) of not more than 5'000 g/mol, more preferably not more than 3'500 g/mol, even more preferably not more than 3'000 g/mol and/or a polydispersity index (Mw/Mn) determined by gel permeation-chromatography (GPC) of not more than 7.5, more preferably not more than 5.0, such as in the range of 0.5 - 5.0, preferably 1.0 - 4.5, more preferably 1.0 - 3.5, even more preferably 1.25 - 2.5.

According to a third preferred embodiment, the binder matrix a) of the acoustic damping material comprises:
a2) 0.5 - 20 wt.-%, preferably 2.5 - 15 wt.-% of the polymer component **P** comprising at least one elastomer **E,**
a3) 0.5 - 35 wt.-%, preferably 2.5 - 25 wt.-% of the at least one hydrocarbon resin **HR,**
a4) 0 - 15 wt.-%, preferably 0.5 - 10 wt.-% of the at least one wax **W,** and
a5) 0 - 30 wt.-%, preferably 0.5 - 25 wt.-% of the at least one plasticizer **PL,** all proportions being based on the total weight of the acoustic damping material, all proportions being based on the total weight of the acoustic damping material.

Acoustic damping materials according to the third preferred embodiment can be characterized as "bitumen-free elastomeric damping materials". According to one or more embodiments, the bitumen-free elastomeric damping material comprises less than 1 wt.-%, preferably less than 0.5 wt.-%, more preferably less than 0.1 wt.-%, even more preferably less than 0.01 wt.-% of bitumen, based on the total weight of the bitumen-free elastomeric damping material.

According to one or more embodiments, the at least one elastomer **E** is selected from the group consisting of butyl rubber, halogenated butyl rubber, ethylene-propylene diene monomer rubber, natural rubber, chloroprene rubber, synthetic 1,4-cis-polyisoprene, polybutadiene rubber, ethylene-propylene rubber, styrene-butadiene rubber, isoprene-butadiene rubber, styrene-isoprene-butadiene rubber, acrylonitrile-isoprene rubber, and acrylonitrile-butadiene rubber, preferably from the group consisting of butyl rubber, halogenated butyl rubber, ethylene-propylene diene monomer rubber, chloroprene rubber, synthetic 1,4-cis-polyisoprene, polybutadiene rubber, and ethylene-propylene rubber.

The term "butyl rubber" designates in the present document a polymer derived from a monomer mixture containing a major portion of a C₄ to C₇ monoolefin monomer, preferably an isoolefin monomer and a minor portion, such as not more than 30 wt.-%, of a C₄ to C₁₄ multiolefin monomer, preferably a conjugated diolefin. The preferred C₄ to C₇ monoolefin monomer may be selected from the group consisting of isobutylene, 2-methyl-1-butene, 3-methyl-1-butene, 2-methyl-2-butene, 4-methyl-1-pentene, and mixtures thereof.

The preferred C₄ to C₁₄ multiolefin comprises a C₄ to C₁₀ conjugated diolefin. The preferred C₄ to C₁₀ conjugated diolefin may be selected from the group comprising isoprene, butadiene, 2,4-dimethylbutadiene, piperyline, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof.

According to one or more embodiments, the at least one elastomer **E** comprises 3 - 15 wt.-%, preferably 3.5 - 12.5 wt.-%, more preferably 5 - 12.5 wt.-% of the total weight of the acoustic damping material.

According to one or more embodiments, the polymer component **P** comprises, in addition to the at least one elastomer **E,** at least one thermoplastic polymer **TMP,** preferably selected from the group consisting of polyolefin homopolymers and copolymers, copolymers of ethylene with vinyl acetate, and thermoplastic olefin elastomers (TPE-O)

The preferences given above for the at least one thermoplastic polymer **TP** used in the bitumen-free thermoplastic damping material apply also to the at least one thermoplastic polymer **TMP** used in the bitumen-free elastomeric damping material.

According to one or more embodiments, the weight ratio of the amount of the at least one elastomer **E** to the amount of the at least one thermoplastic polymer **TMP** is in the range of 10:1 to 1:3, preferably 5:1 to 1:2, more preferably 5:1 to 1:1.

According to one or more embodiments, the bitumen-free elastomeric damping material further comprises a vulcanization system **VS.**

A large number of vulcanization systems based on elementary sulfur as well as vulcanization systems not containing elementary sulfur are suitable.

In case a vulcanization system based on elementary sulfur is used, the vulcanization system **VS** preferably contains pulverulent sulfur, more preferably at least one sulfur compound selected from the group consisting of powdered sulfur, precipitated sulfur, high dispersion sulfur, surface-treated sulfur, and insoluble sulfur.

Preferred vulcanization systems based on elementary sulfur comprise 1 - 15 wt.-%, more preferably 5 - 10 wt.-% of pulverulent sulfur, preferably at least one sulfur compound selected from the group consisting of powdered sulfur, precipitated sulfur, high dispersion sulfur, surface-treated sulfur, and insoluble sulfur, based on the total weight of the vulcanization system.

According to one or more embodiments, the vulcanization system **VS** is a vulcanization system without elementary sulfur.

Preferred vulcanization systems without elementary sulfur comprise at least one vulcanization agent and optionally at least one organic vulcanization accelerator and/or at least one inorganic vulcanization accelerator.

Suitable vulcanization agents for vulcanization systems without elementary sulfur include, for example, organic peroxides, phenolic resins, bisazidoformates, polyfunctional amines, para-quinone dioxime, para-benzoquinone dioxime, para-quinone dioxime dibenzoate, p-nitrosobenzene, dinitrosobenzene, thiuram compounds, bismaleimides, dithiols, zinc oxide as well as vulcanization systems crosslinked with (blocked) diisocyanates.

Suitable organic vulcanization accelerators to be used in vulcanization systems without elementary sulfur include thiocarbamates, dithiocarbamates (in the form of their ammonium or metal salts), xanthogenates, thiuram compounds (monosulfides and disulfides), thiazole compounds, aldehyde-amine accelerators, for example hexamethylenetetramine, and guanidine accelerators.

Suitable inorganic vulcanization accelerators to be used in vulcanization systems without elementary sulfur include, for example, zinc compounds, in particular zinc salts of fatty acids, basic zinc carbonates, and zinc oxide.

According to one or more embodiments, the vulcanization system **VS** is a vulcanization system without elementary sulfur, preferably containing at least one vulcanization agent selected from the group consisting of para-quinone dioxime, para-benzoquinone dioxime, para-quinone dioxime dibenzoate, p-nitrosobenzene, dinitrosobenzene, and thiuram compounds, preferably from the group consisting of para-quinone dioxime, para-benzoquinone dioxime, para-quinone dioxime dibenzoate, tetramethyl thiuram disulfide (TMTD), and tetrabenzylthiuram disulfide (TBzTD), and preferably further containing at least one organic vulcanization accelerator and/or at least one an inorganic vulcanization accelerator.

According to one or more embodiments, the at least one organic vulcanization accelerator is selected from the group consisting of cyclohexylbenzothiazole sulfonamide, mercaptobenzothiazole sulfide (MBTS), diphenyl guanidine, and zinc dimethyldithiocarbamate.

According to one or more embodiments, the at least one inorganic vulcanization accelerator is selected from the group consisting of zinc salts of fatty acids, basic zinc carbonates, and zinc oxide, more preferably zinc oxide.

According to one or more embodiments, the vulcanization system **VS** without elementary sulfur comprises 1 - 15 wt.-%, more preferably 1 - 12.5 wt.-%, even more preferably 2 - 10 wt.-%, most preferably 3.5 - 10 wt.-% of the total weight of the bitumen-free elastomeric damping material.

According to one or more embodiments, the acoustic damping material further comprises at least one blowing agent **BA.**

Suitable blowing agents **BA** to be used in the acoustic damping material include both chemical blowing agents and physical blowing agents. Chemical blowing agents are typically solids that liberate gas(es) by means of a chemical reaction, such as decomposition, when exposed to higher temperatures. Chemical blowing agents may be either inorganic or organic.

Suitable chemical blowing agents include, for example, azodicarbonamides; hydrazine derivatives such as, for example, 4,4'-oxybis(benzenesulfohydrazide), diphenylsulfone-3,3'-disulfohydrazide and trihydrazinotriazine; semicarbides such as, for example, p-toluylenesulfonyl semicarbide; tetrazoles such as, for example, 5-phenyltetrazole; benzoxazines such as, for example, isatoic anhydride; carbonates and bicarbonates such as, for example, sodium bicarbonate, ammonium carbonate, ammonium bicarbonate, and potassium bicarbonate; and carboxylic acids such as, for example, solid, hydroxy-functionalized or unsaturated dicarboxylic, tricarboxylic, tetracarboxylic, and polycarboxylic acids, such as citric acid, tartaric acid, malic acid, fumaric acid, and maleic acid.

Suitable physical blowing agents include, for example, expandable microspheres, consisting of a thermoplastic shell filled with thermally expandable fluids or gases. Examples of suitable commercially available expandable microspheres include, for example, Expancel® microspheres (from AkzoNobel).

The amount of the at least one blowing agent **BA,** if used, preferably comprises 0.1 - 5 wt.-%, preferably 0.25 - 3.5 wt.-%, more preferably 0.5 - 3 wt.-%, even more preferably 1 - 3 wt.-% of the total weight of the acoustic damping material.

The acoustic damping material may optionally contain additives, which are customary for acoustic damping materials. Examples of suitable additives include, for example, pigments, thixotropic agents, thermal stabilizers, drying agents, and flame retardants. These additives, if used at all, preferably comprise not more than 25 wt.-%, more preferably not more than 15 wt.-%, even more preferably not more than 10 wt.-%, of the total weight of the acoustic damping material.

The preferences given above for the bitumen **B** component, the polymer component **P,** the at least one modifying polymer **MP,** the at least one thermoplastic polymer **TP,** the at least one thermoplastic polymer **TMP,** the at least one elastomer **E,** the at least one hydrocarbon resin **HR,** the at least one wax **W,** the at least one plasticizer **PL,** the at least one solid particulate cellulose-containing filler **FW,** and the at least one solid particulate mineral filler **FM** and apply equally for all subjects of the present invention unless stated otherwise.

Another subject of the present invention is a method for producing an acoustic damping material according to the present invention, the method comprising mixing the constituents of the binder matrix a) with the constituents of the filler component b) at an elevated temperature, preferably at a temperature in the range of 120 - 200 °C, more preferably 130 - 180 °C, until a homogeneously mixed mixture is obtained.

The term "homogeneously mixed mixture" refers in the present document to compositions, in which the individual constituents are distributed substantially homogeneously in the composition. Furthermore, a homogeneously mixed mixture is preferably a multi-phase mixture. For example, a homogeneously mixed mixture of a polymer component and a filler component, therefore, refers to composition in which the constituents of the filler phase are homogeneously/uniformly distributed in the polymer phase. For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Any conventional type of a mixing apparatus can be used for mixing of the components a) and b) with each other. The mixing step can be conducted as a batch process using a conventional batch-type mixer, such as a Dreis mixer, a Brabender mixer, a Banbury mixer, or a roll mixer or as a continuous process using a continuous-type mixer, such as an extruder, in particular a single-, a twin-screw extruder or a planetary roller extruder.

The homogeneously mixed mixture obtained from the mixing step can be subsequently cooled to a temperature of below 70 °C, preferably of below 50 °C, more preferably of below 40 °C. In case an extruder apparatus is used in the mixing step, the homogeneously mixed mixture is preferably extruded through an extruder die before the cooling step. The cooled homogeneously mixed mixture is storage stable at normal storage conditions. The term "storage stable" refers in the present disclosure to materials, which can be stored at specified storage conditions for long periods of time, such as at least one month, in particular at least 3 months, without any significant changes in the application properties of the material. The "typical storage conditions" refer to temperatures of not more than 50°C, in particular not more than 35°C.

The homogeneously mixed mixture can furthermore be processed into a form of a shaped article, such as a sheet or a film by using any conventional techniques, such as extrusion, calendering, and hot-pressing techniques. The shaping step is preferably conducted at an elevated temperature, and/or before the cooling step. According to one or more embodiments, the homogeneously mixed mixture is extruded through an extruder die, preferably a flat die, to form a sheet or film, which is preferably cooled between a pair of calender cooling rolls. According to one or more further embodiments, a sheet or film is formed from the homogeneously mixed mixture by squeezing said mixture between one or more generally parallel pairs of rolls of a calendering apparatus. Shaped articles having specific dimensions can be produced from the extruded and/or calendered sheet or film, for example, by punch or die cutting.

Another subject of the present invention is use of the acoustic damping material according to the present invention for damping of vibrations and/or noise in transportation vehicles or white goods.

Another subject of the present invention is a vibration and noise damping element (1) comprising:
i) A damping layer (2) having a first and a second surface (3, 3') and
ii) An adhesive layer (4) covering at least a portion of the first surface (3) of the damping layer (2), wherein the damping layer (2) comprises or is composed of the acoustic damping material of the present invention.

A cross-section of the vibration and noise damping element according to the present invention is shown in Fig. 1.

According to one or more embodiments, the damping layer is sheet-like element having a first and a second major surfaces defining a thickness there between and a length and width at least 5 times, preferably at least 15 times, more preferably at least 25 times greater than the thickness of the sheet-like element. The term "thickness" refers to a dimension of a sheet-like element that is measured in a plane that is substantially perpendicular to the length and width dimensions of the element. In embodiments, in which the damping layer is sheet-like element, the first and second surfaces of the damping layer correspond to the first and second major surfaces of a sheet-like element.

The damping layer and the adhesive layer are preferably directly connected to each other over their opposing surfaces. The expression "directly connected" is understood to mean in the context of the present invention that no further layer or substance is present between the two layers and that the opposing surfaces of the layers are directly adhered to each other. According to one or more embodiments, the adhesive layer covers at least 65 %, preferably at least 75 %, more preferably at least 85 %, even more preferably at least 90 %, still more preferably at least 95 % of the first surface of the damping layer. According to one or more further embodiments, the adhesive layer covers substantially the entire area of the first surface of the damping layer. The expression "substantially entire area" is understood to mean at least 97.5 %, preferably at least 98.5 %, more preferably at least 99.5 % of the total area.

The adhesive layer preferably comprises a pressure sensitive adhesive or a hot-melt adhesive composition. The term "pressure sensitive adhesive" is understood to include also pressure sensitive hot-melt adhesives (HM-PSA). According to one or more embodiments, the adhesive layer is composed of a pressure sensitive adhesive or of a hot-melt adhesive composition.

Suitable pressure sensitive adhesives to be used in the adhesive layer include compositions based on acrylic polymers, styrene block copolymers, amorphous polyolefins (APO), amorphous poly-α-olefins (APAO), vinyl ether polymers, or elastomers such as, for example, butyl rubber, ethylene vinyl acetate having a high content of vinyl acetate, natural rubber, nitrile rubber, silicone rubber, and ethylene-propylene-diene rubber. In addition to the above mentioned polymers, suitable pressure sensitive adhesive compositions typically comprise one or more additional constituents including, for example, tackifying resins, waxes, and plasticizers as wells as one or more additives such as, for example, UV-light absorption agents, UV- and heat stabilizers, optical brighteners, pigments, dyes, and desiccants.

Hot-melt adhesives are solvent free adhesives, which are solid at room temperature and which are applied to the substrate to be bonded in form of a melt. After cooling the adhesive solidifies and forms an adhesive bond with the substrate through physically and/or chemically occurring bonding. Suitable hot-melt adhesives include, for example, polyolefin-based hot-melt adhesives, in particular those based on amorphous polyolefins (APO) and amorphous poly-alpha-olefins (APAO), thermoplastic copolymer-based hot-melt adhesives, in particular those comprising copolymers ethylene and vinyl acetate (EVA) or polyamide as the main polymer component, and polyurethane-based hot-melt adhesives. In addition to the above mentioned polymers, suitable hot-melt adhesive compositions typically comprise one or more additional constituents including, for example, resins and waxes as well as one or more additives such as, for example, UV-light absorption agents, UV- and heat stabilizers, optical brighteners, pigments, dyes, and desiccants. Suitable hot-melt adhesives to be used in the adhesive layer are disclosed, for example, in WO 2011/023768 A1, WO 2016/139345 A1, and WO 2017/174522 A1.

According to one or more embodiments, the damping layer has a maximum thickness in the range of 0.5 - 15 mm, preferably 1 - 10 mm, more preferably 1.5 - 7.5 mm, even more preferably 1.5 - 5 mm and/or a density in the range of 0.1 - 5 g/cm³, preferably 0.2 - 4.5 g/cm³, more preferably 0.3 - 3 g/cm³, even more preferably 0.3 - 2.5 g/cm³ and/or a mass per unit area of 1 - 5 kg/m², preferably 1 - 4.5 kg/m², more preferably 1.5 - 4.5 kg/m², still more preferably 1.5 - 3.5 kg/m².

According to one or more embodiments, the vibration and noise damping element has a loss factor determined at 200 Hz at temperature of 20 °C using the method as defined in ISO 6721 standard, of at least 0.1, preferably at least 0.15. Such vibration and noise damping elements have been found out to be especially suitable for use in damping of vibrations of components and structures contained in articles of automotive industry and home appliances.

According to one or more embodiments, the vibration and noise damping element further comprises, in addition to the damping layer and the adhesive layer, a constraining layer covering at least a portion of the second surface of the damping layer. The vibration and noise damping element according to these embodiments are generally known as "constrained layer dampers". The damping layer and the constraining layer are directly or indirectly connected to each other over their opposing surfaces, i.e. the damping layer is sandwiched between the adhesive layer and the constraining layer. According to one or more embodiments, the constraining layer covers substantially the entire area of the second surface of the damping layer. A cross-section of a vibration and noise damping element according to these embodiments is shown in Figure 2.

According to one or more embodiments, the constraining layer is a metal sheet, preferably aluminum or steel sheet or a polymeric sheets, preferably glass fiber reinforced polymer sheet. The thickness of the constraining layer is not particularly restricted but the use of constraining layers that are thinner than the damping layer is generally preferred. Preferred thickness also depends on the material of the constraining layer. According to one or more embodiments, the constraining layer has a thickness of 0.05 - 1.5 mm, preferably 0.1 - 1.25 mm, more preferably 0.1 - 1.0 mm. According to one or more embodiments, the constraining layer is a metal sheet having a thickness of 0.05 - 0.5 mm, preferably 0.05 - 0.4 mm. According to one or more further embodiments, the constraining layer is a polymeric sheet having a thickness of 0.1 - 1.2 mm, preferably 0.25 - 1.0 mm.

It is preferred that the constraining layer has an elastic modulus, which is larger than that of the damping layer, such larger by at least the factor 3, preferably at least the factor 5, more preferably at least a factor of 10, wherein the elastic modulus is measured by using the method as defined in ISO 6892-1:2016 standard (for metallic sheets) or as defined in ISO 527-2 standard (for polymeric sheets).

Another subject of the present invention is a method for producing a vibration and noise damping element of the present invention, the method comprising steps of:
i) Providing a damping layer comprising or composed of the acoustic damping material of the present invention and having a first and a second surface,
ii) Applying an adhesive composition on the first surface of the damping layer.

Step i) can be conducted any conventional techniques known to a person skilled in the art. For example, the acoustic damping material of the present invention can be first melt-processed in an extruder apparatus and then extruded though an extruder die, preferably a flat die, into a form of a damping layer. Alternatively, the acoustic damping material of the present invention can be processed into a damping layer by using calendering or hot-pressing techniques.

The adhesive composition can be applied on the surface of the damping layer using any conventional techniques, the details of which depend on the type of the adhesive composition. For example, the adhesive composition can be applied on the surface of the sheet by nozzle extrusion, powder dispersion, hot-melt calendaring, or by spray lamination techniques. In case of a hot-melt adhesive composition or a hot-melt pressure sensitive adhesive (HM-PSA) composition, the adhesive composition is first heated to an elevated application temperature above the softening point (Tₛ) of the adhesive before being applied on the surface of the damping layer.

Another subject of the present invention is a method for applying a vibration and noise damping element according to the present invention to a noise emitting surface of a substrate, the method comprising steps of:
I) Providing a vibration and noise damping element according to the present invention,
II) Contacting the outer major surface of the adhesive layer of said vibration and noise damping element with the noise emitting surface and applying sufficient pressure to form an adhesive bond or
II') Heating the adhesive layer of said vibration and noise damping element and/or the substrate and contacting the outer major surface of the adhesive layer with the noise emitting surface and forming an adhesive bond by cooling of the adhesive layer.

The term "outer major surface" of the adhesive layer refers to the major surface of the adhesive layer on the side opposite to the side of the damping layer. The substrate having a noise emitting surface can be any type of shaped article, such as a panel, a sheet, or a film, composed, for example, of metal, plastic, or fiber reinforced plastic. The heating of the adhesive layer and/or the substrate in step II)' can be conducted using any conventional techniques, such as heating in an oven, heating by air stream, or heating with infrared (IR)-radiation.

Still another subject of the present invention is a vibration damped system comprising a substrate (6) having a noise emitting surface (7) and a vibration and noise damping element (1) according to the present invention, wherein least a portion of the first surface (3) of the damping layer (2) is adhesively bonded to the noise emitting surface (7) via the adhesive layer (4). A cross-section of a vibration damped system is shown in Figure 3.

According to one or more embodiments, the vibration and noise damping element (1) is a constrained damping element comprising a constraining layer (5), wherein the damping layer (2) is sandwiched between the adhesive layer (4) and a constraining layer (5). A cross-section of a vibration damped system according to these embodiments is shown in Figure 4.

According to one or more embodiments, the substrate having the noise emitting surface is part of a structure of an automotive vehicle or a white good.

### Examples

The followings products shown in Table 1 were used in the examples.

**Table 1**

| | |
|---|---|
| **B** | Mixture of bitumen, PEN = 15-80 1/10 mm |
| **P** | Mixture of polyolefins |
| **HR** | Hydrocarbon resin, R&B softening point 100-170 °C (ASTM E 28), glass transition temperature determined by DSC 70-120 °C |
| **W** | Wax |
| **PL** | Process oil |
| **FW1** | Hard wood particles, D₅₀ particle width 190-220 µm |
| **FW2** | Hard wood particles, D₅₀ particle width 330-340 µm |
| **FM1** | Mineral filler, d₅₀ particle diameter < 50 µm |
| **FM2** | Mineral filler, d₅₀ particle diameter > 500 µm |
| **FM3** | Hollow mineral spheres |
| **A** | Additive package containing rheology modifier and drying agent |

### Preparation of sheets of damping materials

The damping materials having the compositions Ref-1, and Ex-1 to Ex-7 as shown in Table 2 were prepared according to the following procedure.

In a first step, the bitumen **B,** the polymer **P1,** the hydrocarbon resin **HR,** and the wax **W** were mixed in a batch type mixer until a homogeneously mixed mixture was obtained. After this, the remaining components of the damping material were added and the mixing was continued until a homogeneously mixed mixture was obtained. The thus obtained mixture was processed into sheets having a thickness of ca. 2 mm and mass per unit area of ca. 3 kg/m² by using a conventional calendering apparatus.

### Measurement of the loss factor

Test specimens having suitable dimensions were obtained from the previously prepared sheets of damping materials by cutting or die cutting. One of the major surfaces of each test specimen was coated with a layer of pressure sensitive acrylate-based adhesive. The adhesive layer had a thickness of 50 µm.

The loss factors for the test specimen were determined by using the measurement method as defined in ISO 6721 standard. The measurements were conducted using a commercially available loss factor tester at a temperature in the range of from 20 to 60 °C. The values of the loss factor at the frequency of 200 Hz were obtained from the measured values of the loss factor value by mathematical means.

### Measurement of density

The densities of the test specimens (without the adhesive layer) were measured according to DIN EN ISO 1183 standard using a water immersion method (Archimedes principle) in deionized water and a precision balance to measure the mass of the test specimens.

### Determined properties

The damping properties of the exemplary compositions were characterized by using following parameters:
- Maximum measured loss factor (LFₘₐₓ)
- Temperature at which the maximum loss factor is measured (T @LFₘₐₓ)
- Broadness of the temperature range wherein the measured loss factor is at or above 0.1 (ΔT for LF ≥ 0.1)

**Table 2**

| **Compositions, [wt.-%]** | **Ref-1** | **Ex-1** | **Ex-2** | **Ex-3** | **Ex-4** | **Ex-5** | **Ex-6** | **Ex-7** |
|---|---|---|---|---|---|---|---|---|
| **B** | 36.5 | 36.5 | 36.5 | 36.5 | 36.5 | 36.5 | 36.5 | 36.5 |
| **P** | 1.75 | 1.75 | 1.75 | 1.75 | 1.75 | 1.75 | 1.75 | 1.75 |
| **HR + W** | 1.25 | 1.25 | 1.25 | 1.25 | 1.25 | 1.25 | 1.25 | 1.25 |
| **FW1** | - | - | 2 | 4 | 5 | 6 | 8 | 10 |
| **FW2** | - | 10 | 8 | 6 | 5 | 4 | 2 | 0 |
| **FM1** | 24 | 24 | 24 | 24 | 24 | 24 | 24 | 24 |
| **FM2** | 22.5 | 22.5 | 22.5 | 22.5 | 22.5 | 22.5 | 22.5 | 22.5 |
| **FM3** | 10 | - | - | - | - | - | - | - |
| ^{a}**A** | 2 | 2 | 2 | 2 | 2 | 2 | 2 | 2 |
| Total | 100.00 | 100.00 | 100.00 | 100.00 | 100.00 | 100.00 | 100.00 | 100.00 |

| **Measured properties** | | | | | | | | |
|---|---|---|---|---|---|---|---|---|
| Density [g/cm³] | 1.38 | 1.39 | 1.40 | 1.42 | 1.41 | 1.40 | 1.41 | 1.41 |
| LFₘₐₓ | 0.149 | 0.159 | 0.163 | 0.171 | 0.183 | 0.173 | 0.166 | 0.167 |
| T @LFₘₐₓ [°C] | 21.5 | 30 | 25 | 22 | 20 | 20 | 18 | 16 |
| ΔT for LF >0.1 [%] | 30 | 34 | 36 | 36 | 38 | 37 | 37 | 36 |

| | | | | | | | | |
|---|---|---|---|---|---|---|---|---|
| ^{a}Rheology modifier and drying agent | | | | | | | | |

## Claims

1. An acoustic damping material comprising:
a) A binder matrix comprising,
a1) A bitumen component **B** or
a2) A polymer component **P,**
a3) Optionally at least one hydrocarbon resin **HR,**
a4) Optionally at least one wax **W,**
a5) Optionally at least one plasticizer **PL,** and
b) A filler component comprising:
b1) At least one solid particulate cellulose-containing filler **FW** and
b2) Optionally at least one solid particulate mineral filler **FM,**
wherein the at least one solid particulate cellulose-containing filler **FW** has a median particle width D₅₀ in the range of 25 - 1000 µm, preferably 50 - 750 µm.

2. The acoustic damping material according to claim 1, wherein the filler component b) comprises at least 25 wt.-%, preferably at least 35 wt.-% of the total weight of the acoustic damping material.

3. The acoustic damping material according to claim 1 or 2 comprising:
b1) 1-35 wt.-%, preferably 5-25 wt.-% of the at least one solid particulate cellulose-containing filler **FW,** based on the total weight of the acoustic damping material.

4. The acoustic damping material according to any one of previous claims, wherein the at least one solid particulate cellulose-containing filler **FW** has a number average aspect ratio of not more than 10, preferably not more than 7.5, wherein the aspect ratio is determined as the ratio of the length (L) and thickness (T) of a particle.

5. The acoustic damping material according to any one of previous claims, wherein the at least one solid particulate cellulose-containing filler **FW** is composed of wood particles, preferably of hardwood particles.

6. The acoustic damping material according to any one of previous claims, wherein the at least one solid particulate cellulose-containing filler **FW** comprises:
b11) At least one first solid particulate cellulose-containing filler **FW1** and
b12) At least one second solid particulate cellulose-containing filler **FW2,** wherein the median particle width D₅₀ of the at least one first solid particulate cellulose-containing filler **FW1** is at least 5 % preferably at least 15 % smaller than the median particle width D₅₀ of the at least one second solid particulate cellulose-containing solid particulate filler **FW2.**

7. The acoustic damping material according to claim 6, wherein the weight ratio of the amount of the at least one first solid particulate cellulose-containing filler **FW1** to the amount of the at least one second solid particulate cellulose-containing filler **FW2** is in the range of 5:1 to 1:5, preferably 3:1 to 1:3.

8. The acoustic damping material according to any one of previous claims comprising:
b2) 10 - 75 wt.-%, preferably 15 - 70 wt.-% of the at least one solid particulate mineral filler **FM,** based on the total weight of the acoustic damping material.

9. The acoustic damping material according to any one of previous claims, wherein the material is substantially free of hollow ceramic spheres, preferably substantially free of hollow ceramic spheres, hollow glass spheres, hollow organic spheres, and glass spheres.

10. The acoustic damping material according to any one of previous claims, wherein the at least one hydrocarbon resin **HR** has a softening point determined by using the Ring and Ball method as defined in DIN EN 1238 standard of at least 70 °C, preferably of at least 80 °C and/or wherein the at least one wax **W** is selected from the group consisting of polyolefin waxes, paraffin waxes, microcrystalline waxes, and amide waxes.

11. The acoustic damping material according to any one of claims 1-10 comprising:
a1) 20 - 65 wt.-%, preferably 25 - 55 wt.-% of the bitumen component **B,**
a3) 0.1 - 10 wt.-%, preferably 0.25 - 5 wt.-% of the at least one hydrocarbon resin **HR,** and
a4) 0 - 10 wt.-%, preferably 0.25 - 7.5 wt.-% of the at least one wax **W,** all proportions being based on the total weight of the acoustic damping material.

12. The acoustic damping material according to claim 11 further comprising at least one modifying polymer **MP** selected from the group consisting of atactic polypropylenes (APP), amorphous polyolefins (APO), styrene block copolymers, styrene-butadiene rubber (SBR), ethylene propylene diene monomer rubber (EPDM), polyisoprene, polybutadiene, natural rubber, polychloroprene rubber, ethylene-propylene rubber (EPR), nitrile rubbers, and acrylic rubbers, wherein the at least one modifying polymer **MP** preferably comprises 0.5 - 10 wt.-% of the total weight of the acoustic damping material.

13. The acoustic damping material according to any one of claims 1-10 comprising:
a2) 0.5 - 25 wt.-%, preferably 1.5 - 20 wt.-% of the polymer component **P** comprising at least one thermoplastic polymer **TP,**
a3) 2.5 - 35 wt.-%, preferably 5-30 wt.-% of the at least one hydrocarbon resin **HR,**
a4) 0 - 15 wt.-%, preferably 1 - 15 wt.-% of the at least one wax **W,** and
a5) 0-30 wt.-%, preferably 1 - 15 wt.-% of the at least one plasticizer **PL,** all proportions being based on the total weight of the acoustic damping material.

14. The acoustic damping material according to claim 13, wherein the at least one thermoplastic polymer **TP** is selected from the group consisting of polyolefin homopolymers and copolymers, copolymers of ethylene with vinyl acetate, and thermoplastic olefin elastomers (TPE-O) and/or wherein the at least one plasticizer **PL** is selected from the group consisting of process oils and at 25 °C liquid hydrocarbon resins.

15. The acoustic damping material according to any one of claims 1-10 comprising:
a2) 0.5 - 25 wt.-%, preferably 2.5 - 20 wt.-% of the polymer component **P** comprising at least one elastomer **E,**
a3) 0.5 - 35 wt.-%, preferably 2.5 - 25 wt.-% of the at least one hydrocarbon resin **HR,**
a4) 0-15 wt.-%, preferably 1-15 wt.-% of the at least one wax **W,** and
a5) 0-30 wt.-%, preferably 1 - 25 wt.-% of the at least one plasticizer **PL,** all proportions being based on the total weight of the acoustic damping material.

16. The acoustic damping material according to claim 15, wherein the at least one elastomer **E** is selected from the group consisting of butyl rubber, halogenated butyl rubber, styrene-butadiene rubber (SBR), ethylene-propylene rubber (EPR), ethylene-propylene diene monomer rubber (EPDM), natural rubber, polychloroprene rubber, cis-1,4-polyisoprene, polybutadiene rubber, isoprene-butadiene rubber, styrene-isoprene-butadiene rubber, nitrile rubber, nitrile-butadiene rubber, and acrylonitrile rubber.

17. Use of the acoustic damping material according to any one of claims 1-16 for damping of vibrations and/or noise in transportation vehicles or white goods.

18. A vibration and noise damping element (1) comprising:
i) A damping layer (2) having a first surface (3) and a second surface (3') and
ii) An adhesive layer (4) covering at least a portion of the first surface (3) of the damping layer (2), wherein the damping layer (2) comprises or is composed of the acoustic damping material according to any one of claims 1-16.

19. A method for applying a vibration and noise damping element (1) according to claim 18 to a noise emitting surface (7) of a substrate (6), the method comprising steps of:
I) Providing the vibration and noise damping element (1) according to claim 18,
II) Contacting the outer major surface of the adhesive layer (4) with the noise emitting surface (7) and applying sufficient pressure to form an adhesive bond or
II') Heating the adhesive layer (4) and/or the substrate (6) and contacting the outer major surface of the adhesive layer (4) with the noise emitting surface (7) and forming an adhesive bond by cooling of the adhesive layer (4).

20. A vibration damped system comprising a substrate (6) having a noise emitting surface (7) and a vibration and noise damping element (1) according to claim 18, wherein least a portion of the first surface (3) of the damping layer (2) is adhesively bonded to the noise emitting surface (7) via the adhesive layer (4), wherein said substrate (6) having the noise emitting surface (7) is preferably part of a structure of an automotive vehicle or a white good.
